Europäisches Patentamt

European Patent Office

Office européen des brevets

(19)

(11) Numéro de publication: **0 318 105 B1**

(12) **FASCICULE DE BREVET EUROPEEN**

(45) Date de publication de fascicule du brevet: **02.03.94** (51) Int. Cl.5: **H04L 25/00**

(21) Numéro de dépôt: **88202635.4**

(22) Date de dépôt: **23.11.88**

(54) **Circuit analogique pour modem en bande de base.**

(30) Priorité: **24.11.87 FR 8716253**

(43) Date de publication de la demande:
**31.05.89 Bulletin 89/22**

(45) Mention de la délivrance du brevet:
**02.03.94 Bulletin 94/09**

(84) Etats contractants désignés:
**BE CH DE FR GB IT LI SE**

(56) Documents cités:
**FR-A- 2 138 340**

**NATIONAL TELECOMMUNICATIONS CONFE-
RENCE, Nouvelle Orléans, Louisiana, 29 novembre - 3 décembre 1981, vol. 3, pages
E1.5.1 - E1.5.6, IEEE, New York, US; H. TAKA-
TORI et al.: "A new equalizing scheme for
digital subscriber loop"**

**COMMUTATION AND TRANSMISSION, no. 1,
janvier 1985, pages 61-70, Paris, FR; J.-P.
LAMORTE: "SEMATRANS 1041 un modem en
bande de base fonctionnant en duplex sur
deux fils"**

(73) Titulaire: **TELECOMMUNICATIONS RADIOE-
LECTRIOUES ET TELEPHONIOUES T.R.T.
88, rue Brillat Savarin
F-75013 Paris(FR)**

(84) Etats contractants désignés:
**BE CH DE GB IT LI SE**

(73) Titulaire: **TRT TELECOMMUNICATIONS RA-
DIOELECTRIOUES ET TELEPHONIOUES
88 rue Brillat Savarin
F-75013 Paris(FR)**

(84) Etats contractants désignés:
**FR**

(72) Inventeur: **Carriere, Vincent Société Civile
S.P.I.D.
209, rue de l'Université
F-75007 Paris(FR)**

(74) Mandataire: **Chaffraix, Jean et al
Société Civile S.P.I.D.
156, Boulevard Haussmann
F-75008 Paris (FR)**

Rank Xerox (UK) Business Services
(3.10/3.09/3.3.3)

EP 0 318 105 B1

**COMMUTATION AND TRANSMISSION, vol. 2, no. 4, décembre 1980, pages 53-66, Issy-les-Moulineaux, FR; P. BOUTMY et al.: "Système de transmission à 140 Mbit/s sur câbles à paires coaxiales"**

## Description

La présente invention concerne un circuit analogique associé à un circuit logique précaractérisé pour constituer un modem adapté à transmettre des données à une certaine cadence sur un canal de transmission, circuit analogique comportant :
- un accès d'horloge pour recevoir un signal d'horloge représentatif de ladite cadence,
- une partie émission formée:
    - d'un accès pour recevoir des données à transmettre émanant du circuit logique précaractérisé,
    - d'au moins un organe de filtrage d'émission pour filtrer les données à transmettre,
    - d'un accès pour émettre, sur le canal de transmission, les données à transmettre filtrées,
- une partie réception formée :
    - d'un accès de réception pour recevoir des données transmises émanant du canal de transmission,
    - d'un organe de traitement impliquant au moins des organes de filtrage de réception pour traiter les données transmises,
    - d'un accès pour fournir au circuit logique précaractérisé des données transmises traitées.

Un tel circuit analogique est connu de la publication "Commutation et Transmission", n°1, 1985 qui décrit un "modem en bande de base fonctionnant en duplex sur deux fils". Le modem est principalement constitué d'un circuit logique précaractérisé assurant les fonctions liées à l'émission, à l'annulation d'écho et à la réception et d'une pluralité de circuits passifs et actifs bipolaires assurant les fonctions analogiques telles que l'amplification, le filtrage, la mise en oeuvre d'un retard analogique, la comparaison et l'égalisation automatique. En particulier l'égalisation est obtenue au moyen d'un dispositif non linéaire constitué d'un filtre passe-haut dont la fréquence de coupure varie automatiquement par l'action de diodes qui court-circuitent plus ou moins une capacité. Un tel modem bénéficie déjà d'un haut niveau d'intégration, cependant pour améliorer encore sa compacité et sa fiabilité ainsi que pour réduire toujours plus sa consommation il est souhaitable que les diverses fonctions analogiques soient combinées au sein d'un même circuit intégré qui pourrait être ainsi directement associé au circuit logique précaractérisé. Toutefois l'intégration de ces fonctions analogiques pose d'indiscutables difficultés et notamment relativement à l'impossibilité de réaliser dans cette technologie les diodes nécessaires à la fonction d'égalisation automatique.

L'invention a pour but de remédier à ce genre de difficultés et propose des moyens pour réduire sensiblement volume et consommation électrique et par conséquent améliorer la fiabilité et la reproductibilité d'un tel modem tout en en diminuant le coût.

Pour cela le circuit analogique pour modem en bande de base du genre mentionné dans le préambule et remarquable en ce que :
- il est monolithiquement intégré selon la technologie CMOS,
- les organes de filtrages sont constitués par des filtres à capacités commutées munis d'une commande de commutation de la gamme de cadence et sont pilotés par un signal d'horloge de fréquence multiple de celui appliqué audit accès d'horloge.

Il est à noter que le document suivant :
"A New Equalizer Scheme for Digital Subscriber Loop" de H.Takatori, paru dans NTC'81, vol.3, 11/01 aux pages E1.5.1 à E1.5.6, décrit l'utilisation de filtres à capacités commutées intégrés en technologie CMOS pour effectuer la fonction d'égalisation. Cependant, ce document ne fait aucune proposition en ce qui concerne les circuits à intégrer avec le filtre à capacités commutées ni en ce qui concerne la commande de commutation de ces filtres par un signal représentatif de la cadence des données.

L'avantage apporté par l'invention est qu'en outre, sans prévoir de mesure supplémentaire, le modem peut fonctionner en mode synchrone et/ou asynchrone à différentes cadences.

De plus, l'emploi de filtres à capacités commutées d'un seul type pour reproduire la fonction d'égalisation automatique est particulièrement simple et souple contrairement aux techniques habituelles utilisant soit l'algorithme du gradient stochastique, soit la commutation automatique de plusieurs filtres passe-haut. L'égalisation est obtenue par écrêtage variable et symétrique des signaux car selon la longueur de la ligne le niveau du signal reçu est de fait plus ou moins élevé et le signal ainsi plus ou mions écrêté, ce signal est de plus écrêté de manière symétrique par rapport à une tension fixée pour être interprété correctement lors de son décodage.

La description suivante en regard des dessins annexés, le tout donné à titre d'exemple, fera bien comprendre comment l'invention peut être réalisée.

La figure 1 montre le circuit analogique intégré selon l'invention et son environnement, l'ensemble constituant un modem en bande de base.

La figure 2 représente un schéma synoptique du modem en bande de base.

La figure 3 propose un diagramme de temps relatif à la fonction retard analogique.

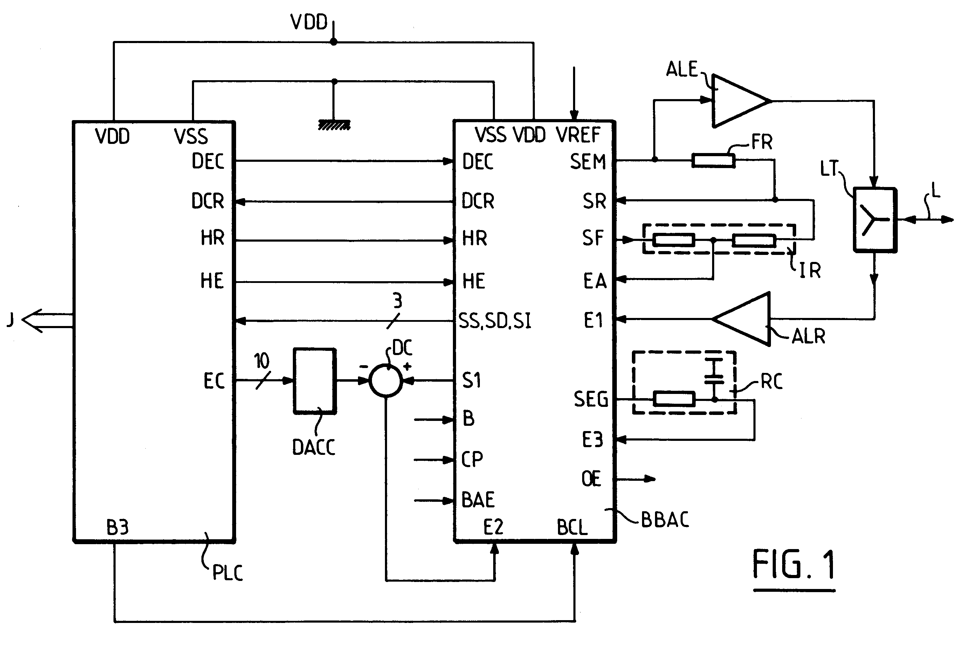

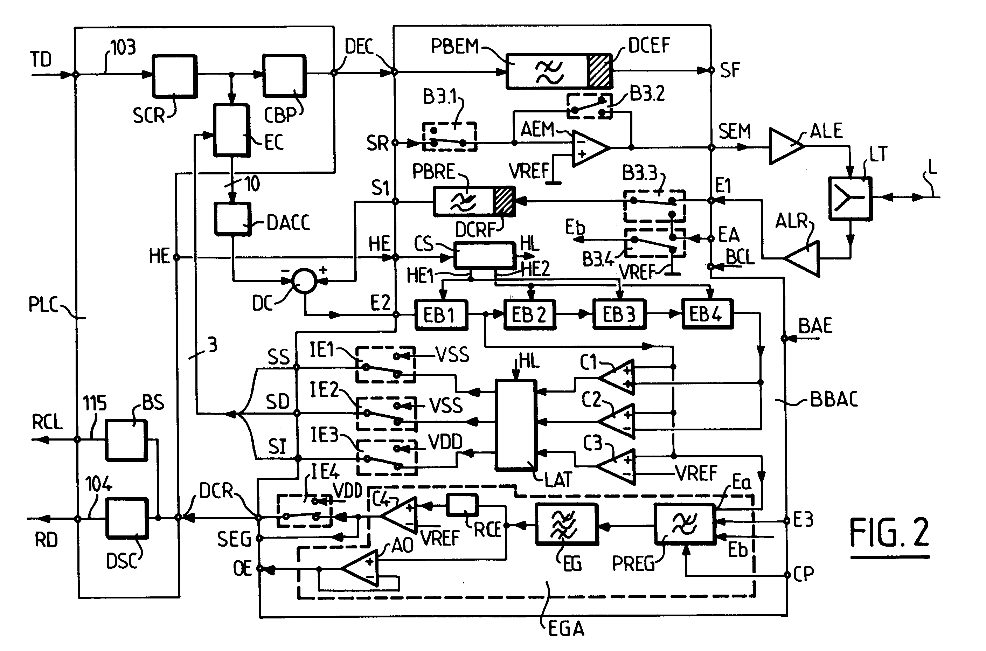

Sur la figure 1 est représenté le circuit analogique pour modem en bande base BBAC avec 24 broches de connexion associé principalement au circuit logique précaractérisé PLC. Les diverses fonctions affectées aux différentes broches de connexion seront explicitées lors de la description de la figure 2.

Les tensions d'alimentation sont appliquées sur les bornes VDD, VSS et VREF et sont découplées les unes par rapport aux autres (les capacités de découplage ne sont pas représentées sur le dessin). La borne d'alimentation VSS des circuits BBAC et PLC est mise au potentiel OV, alors que la borne d'alimentation VDD de ces mêmes circuits est portée à un potentiel positif (par exemple 10V ± 5%). Le potentiel sur la borne d'alimentation VREF du circuit BBAC est égal à (VDD-VSS)/2 (à par exemple ± 1%). Soit Fo la fréquence de référence qui peut varier par exemple de 1kHz à 21kHz le circuit PLC génère une horloge HR et une horloge HE qui sont transmises au circuit BBAC. L'horloge HR = 48Fo est l'horloge générale du circuit BBAC alors que l'horloge HE = 4Fo est l'horloge d'échantillonnage, ces horloges HR et HE étant synchrones sur les fronts de descente.

Trois signaux de commande sont appliqués aux bornes BCL, BAE et B du circuit BBAC. Le signal ["0" (VSS) ou "1" (VDD)] sur la broche BCL est émis à partir de la borne B3 de PLC et permet de commander le test de boucle 3 qui consiste à reboucler une fraction du signal émis sur la réception, alors qu'aucun signal ne doit être transmis sur la ligne L et qu'aucun signal du côté jonction J ne doit perturber le bouclage. Le signal ("0" ou "1") sur la broche BAE permet de positionner des sorties logiques appelées SS, SD, SI et DCR selon une configuration déterminée (détaillée lors de la description de la figure 2). Les signaux sur les broches BCL et BAE permettent ainsi de tester le modem dans ses diverses fonctions et plus particulièrement dans sa fonction d'annulation d'écho (fonction réalisée par le circuit PLC). Enfin le signal ("0" ou "1") sur la broche B permet d'opérer un changement de gamme de fréquences pour les filtres continus.

Différents signaux analogiques sont transmis ou émis vers ou par le circuit BBAC et sont présents sur les bornes ci-après énumérées.

Borne SF : Sortie du signal d'émission filtré par un filtre d'émission PBEM.

Borne SR : Sortie résistance. Une résistance IR externe au circuit BBAC est connectée entre la borne SR et la borne SF et sert de résistance d'entrée d'un amplificateur d'adaptation du niveau de signal d'émission AEM.

Borne SEM : Sortie signal d'émission reliée à la sortie de l'amplificateur d'adaptation AEM. Le signal d'émission est transmis vers un amplificateur de ligne d'émission ALE du côté de la ligne L. Une résistance de contre-réaction FR de l'amplificateur AEM externe au circuit BBAC est connectée entre les bornes SEM et SR.

Borne EA : Entrée analogique sur laquelle est appliqué un signal, qui lorsque la borne BCL est à "0", est transmis d'une part vers l'entrée d'un filtre PBRE et d'autre part vers une entrée d'un égaliseur EGA (le filtre PBRE et l'égaliseur EGA seront décrits en détail avec la figure 2). Le signal analogique présent sur la borne EA est une fraction du signal d'émission filtré SF.

Borne E1 : elle est reliée à l'entrée du filtre PBRE lorsque la borne BCL est à "1". Elle reçoit le signal de sortie de l'amplificateur de ligne de réception ALR du côté de la ligne L.

Borne E2 : elle est reliée à l'entrée d'une ligne à retard analogique ADN (décrite avec la figure 2). Elle reçoit le signal issu d'un circuit de différence DC.

Borne SEG : elle est reliée à la sortie de l'égaliseur EGA.

Borne E3 : est une entrée de l'égaliseur EGA qui permet selon une caractéristique de l'invention de compenser la tension de décalage présente à la sortie de l'égaliseur EGA, un circuit intégrateur RC étant connecté entre la sortie SEG et l'entrée E3 de l'égaliseur EGA.

Borne OE : Sortie "oeil" ainsi nommée car elle permet une observation du signal de sortie analogique de l'égaliseur EGA.

Borne S1 : Sortie signal de réception filtré reliée à la sortie du filtre PBRE. Ce signal de réception filtré est appliqué sur l'entrée positive du circuit de différence DC. En fait, le signal de réception est reçu avec un écho, lié aux différences d'impédances entre lignes et modems ou à la désadaptation entre modems distants, écho qu'il est nécessaire de minimiser ou d'éliminer. Pour cela le circuit logique PLC est muni d'un annuleur d'écho qui estime l'écho incident, la sortie de l'annuleur d'écho EC (10 fils) présente donc un signal numérique d'écho estimé et est connectée à un circuit convertisseur numérique analogique DACC convertissant le signal logique entrant en un signal analogique de l'écho estimé qui est appliqué à l'entrée négative du circuit de différence DC. Ainsi à la sortie du circuit de différence DC est présent un signal qui est le signal de réception filtré dont l'écho estimé a été déduit, c'est ce signal qui, comme cela a été vu précédemment, est appliqué à la borne E2.

Enfin des signaux logiques transitent par les bornes suivantes du circuit BBAC.

Borne DEC : Entrée signal d'émission. Ces données d'entrée sont codées et émises par le circuit logique PLC et sont transmises via la borne DEC à l'entrée du filtre d'émission PBEM.

Borne DCR : Sortie des données codées reçues. Ces données codées sont émises à la sortie de l'égaliseur EGA et sont transmises via la borne DCR vers le circuit logique PLC pour être décodées.

Borne CP : Contrôle de la fréquence de coupure d'un filtre préégaliseur PREG qui est situé à l'entrée de l'égaliseur EGA. Ce filtre PREG échantillonne le signal présent à son entrée à la fréquence 12Fo. Le signal ("0" ou "1") sur la borne CP permet de commuter la fréquence de coupure fc à -3dB, par exemple :

pour CP = "0" fc = 0,22Fo

pour CP = "1" fc = 0,4 Fo

Les bornes de sortie SS, SD et SI sont reliées au circuit logique PLC pour transmettre soit des signaux d'erreurs utilisés par l'annuleur d'écho pour le calcul de l'écho estimé lorsque la borne BAE est à "0", soit pour bloquer l'annuleur d'écho lorsque la borne BAE est à "1".

Les bornes SS, SD et SI sont reliées dans le circuit BBAC à un registre LAT chargé de mémoriser sur un front montant d'horloge la valeur des sorties logiques de trois comparateurs C1, C2, C3, coopérant avec la ligne à retard ADN et de libérer lesdites valeurs à l'usage de l'annuleur d'écho du circuit PLC.

Afin de parfaire la description de l'environnement proche du circuit BBAC, il convient de préciser que les amplificateurs de ligne d'émission ALE et de réception ALR respectivement émettent et reçoivent les données sur et de la ligne téléphonique L (2 fils) via le transformateur de ligne LT ainsi isolé de la sortie émission SEM et de l'entrée réception E1.

Sur la figure 2 est proposé un schéma synoptique du modem en bande de base dans lequel les diverses fonctions du circuit analogique BBAC sont détaillées alors qu'apparaissent certaines fonctions de circuit logique PLC nécessaires à une meilleure compréhension du fonctionnement du circuit selon l'invention. Les éléments communs à la figure 1 sont identiquement référencés.

Conformément à l'idée de l'invention le circuit analogique est intégré en technologie CMOS utilisant des filtres à capacités commutées pilotés par une seule horloge dont la fréquence est un multiple de celle de l'horloge d'émission du modem, lesdits filtres s'adaptant automatiquement à la fréquence des données, la fonction d'égalisation automatique étant également obtenue, et ceci sans réglage, par écrêtage variable et symétrique des signaux au moyen d'un circuit comportant des filtres à capacités commutées d'un seul type. D'une part, la compatibilité avec le circuit logique PLC, la réduction de la consommation, une meilleure reproductibilité sont de la sorte assurées alors que la fiabilité, la compacité sont améliorées pour un plus faible coût et d'autre part une adaptation automatique à la fréquence des données est obtenue en utilisant les filtres à capacités commutées dans une technologie CMOS. En effet ces filtres à capacités commutées pilotés par une seule horloge s'adaptent automatiquement à la vitesse des données, la vitesse pouvant varier par exemple de 1kbit à 21kbit. En outre la réalisation du circuit égaliseur, comme décrite dans la suite, au moyen de filtres à capacités commutées d'un seul type entraîne une simplification de l'intégration tout en assurant une adaptation efficace sans ajustement des pentes des filtres.

Les différents types de filtres utilisés dans la suite du présent mémoire sont analysés dans la référence 1 : "Les filtres actifs", de Paul Bildstein, aux Editions de la Radio.

Les données à transmettre TD, présentes sur le fil 103 (Standard RS 232/V24), sont embrouillées dans le circuit logique PLC au moyen d'un circuit brouilleur SCR dont la sortie est connectée d'une part à une entrée d'un annuleur d'écho EC et d'autre part à l'entrée d'un circuit codeur CBP pour être converties selon un code biphase couramment utilisé dans ce type de modem. Ainsi codées elles sont transmises vers la borne d'entrée du signal d'émission DEC du circuit analogique intégré BBAC. La borne DEC est reliée à l'entrée d'un filtre passe-bas d'émission PBEM qui filtre le signal logique et restitue un signal analogique symétrique par rapport à la tension de référence VREF. Le filtre PBEM est un filtre passe-bas du type Bessel d'ordre 4 (Référence 1) dont la fréquence de coupure à -3dB était dans l'exemple de réalisation égal à 0,92Fo et la fréquence d'horloge HR égale à 48Fo. Ce filtre PBEM est suivi d'un filtre continu DCEF dit de post-échantillonnage qui permet d'éliminer tout repli de spectre autour de la fréquence 48Fo, ce filtre permet également d'éliminer les fréquences supérieures à 2Fo (HE/2), il est constitué par exemple d'une cellule d'ordre 2 en structure Sallen-Key du type Butterworth (Référence 1). Compte-tenu de la gamme de fréquences étendue d'utilisation du circuit BBAC, il est nécessaire de commuter la fréquence de coupure de ce filtre, ce qui est obtenu au moyen du signal de commande B. Ainsi les fréquences d'utilisation Fo du circuit BBAC peuvent par exemple selon la commande B être les suivantes :

B = "0" (VSS) → 1200, 1800, 2400, 3600, 4800, 6000, 7200

B = "1" (VDD) → 9600, 12000, 14400, 19200

La sortie du filtre continu DCEF est reliée à la borne SF elle-même connectée à une extrémité de la résistance extérieure IR (voir figure 1). La seconde extrémité de la résistance IR est connectée à la borne SR, la résistance IR est la résistance d'entrée de l'amplificateur d'adaptation du niveau de signal d'émission AEM. La borne SR est connectée à l'entrée inverseuse de l'amplificateur AEM au travers d'un interrupteur analogique B3.1 permettant de connecter (ou déconnecter) suivant le signal de commande BCL, la borne d'entrée SR à (de) l'entrée inverseuse de l'amplificateur AEM. L'entrée non inverseuse de l'amplificateur est au potentiel VREF. La sortie de l'amplificateur AEM est reliée à la borne SEM. Entre la borne SR et la borne SEM est connectée la résistance de contre-réaction FR (voir figure 1). Un interrupteur analogique B3.2 permet de connecter (ou déconnecter), suivant le signal de commande BCL, l'entrée inverseuse de AEM à (de) sa sortie. Le signal d'émission présent sur la borne SEM est transmis vers l'amplificateur de ligne d'émission ALE puis est émis sur la ligne téléphonique L (2 fils) via le transformateur de ligne LT. Le rôle de l'amplificateur AEM est d'assurer l'interface et l'adaptation de niveau du signal en sortie du filtre DCEF, il est monté en inverseur classique à l'aide des résistances extérieures IR et FR et son gain est toujours inférieur à l'unité. Le signal d'entrée et le signal de sortie de AEM sont des signaux analogiques symétriques par rapport à la tension VREF.

Dans le sens réception, le signal reçu d'un modem distant transitant par la ligne téléphonique L est aiguillé au niveau du transformateur de ligne LT sur l'entrée de l'amplificateur de ligne de réception ALR.

Ce signal reçu est un signal composite constitué du signal effectivement émis par le modem distant et d'un signal d'écho dû essentiellement à la désadaptation entre modems distants et aux différences d'impédances entre lignes et modems. La sortie de l'amplificateur ALR est reliée via la borne d'entrée E1 du circuit BBAC au filtre passe-bas de réception PBRE précédé d'un filtre continu DCRF. Le filtre DCRF est un filtre anti-repliement qui permet d'annuler les fréquences supérieures à 2Fo, tout comme le filtre DCEF il est constitué par exemple d'une cellule d'ordre 2 en structure Sallen-Key du type Butterworth (Référence 1), et sa fréquence de coupure est également commutable au moyen du signal de commande B. Le rôle du filtre PBRE est de filtrer le signal analogique reçu en E1, il est principalement constitué d'un filtre passe-bas du type Bessel d'ordre 4 (Référence 1) dont la fréquence de coupure à -3dB est dans l'exemple de réalisation égale à 1,25Fo et la fréquence d'horloge HR égale à 48Fo. La sortie du filtre PBRE est reliée à la borne de sortie S1. Entre la borne d'entrée E1 et l'entrée du filtre continu DCRF est disposé un interrupteur analogique B3.3 qui permet, suivant le signal de commande BCL, de connecter l'entrée du filtre DCRF soit à la broche E1 dans le cas du fonctionnement général du modem (émission-réception), soit à la broche d'entrée EA dans le cadre d'un test interne au modem pour isoler la partie réception de la ligne et permettre la réinjection d'une partie du signal d'émission (voir figure 1). La broche EA est également reliée à un second interrupteur analogique B3.4 qui permet de connecter une entrée de l'égaliseur EGA (entrée Eb) soit à la tension VREF dans le cas du fonctionnement général du modem (émission-réception) soit à la broche EA dans le cadre du test interne au modem, à l'entrée Eb de l'égaliseur étant alors réinjectée la fraction du signal d'émission appliquée à la borne EA.

Comme cela a été noté précédemment, le signal de réception filtré (par le filtre PBRE), présent sur la borne S1, est entaché d'un écho. Cet écho est estimé par l'annuleur d'écho EC, et doit être déduit du signal de réception filtré. Pour cela le signal numérique d'écho estimé présent à la sortie (10 fils) de l'annuleur d'écho EC est converti en un signal analogique au moyen du circuit de conversion numérique analogique DACC. Le signal de sortie du circuit DACC est appliqué sur la borne négative du circuit de différence DC pour être retranché du signal de réception filtré appliqué sur la borne positive du circuit de différence DC, la sortie du circuit DC étant reliée à l'entrée E2 du circuit BBAC.

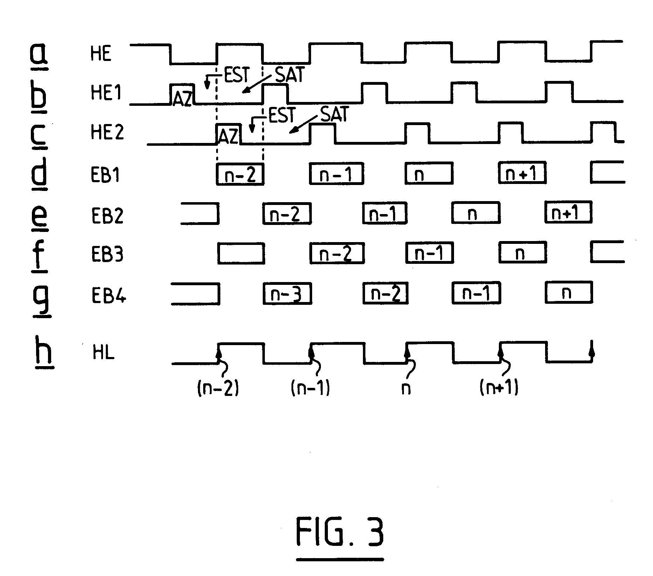

La borne d'entrée E2 correspond à l'entrée d'une ligne à retard analogique ADN, de manière avantageuse elle n'est constituée que de 4 circuits échantillonneurs-bloqueurs EB1, EB2, EB3 et EB4. Le rôle de la ligne à retard ADN est de créer un retard de deux périodes d'échantillonnage entre l'entrée et la sortie des 4 circuits échantillonneurs-bloqueurs, rôle qui est mis en évidence au moyen de la figure 3 représentant un diagramme temporel relatif au retard. Ce retard est nécessaire au fonctionnement de l'annuleur d'écho EC qui de manière connue utilise l'algorithme dit du signe différentiel, le principe de fonctionnement d'un tel annuleur d'écho est décrit dans le brevet français n° 2 534 427. Le principe de fonctionnement de la ligne ADN est exposé en se référant également à la figure 3. Un circuit de mise en forme de l'horloge d'échantillonnage CS reçoit sur son entrée, via le circuit PLC, l'horloge d'échantillonnage HE (représentée figure 3, ligne a) et génère trois signaux HE1, HE2, HL. Le signal HE1 (figure 3, ligne b) est l'horloge d'échantillonnage des circuits échantillonneurs-bloqueurs EB1 et EB3. Le signal HE2 (figure 3, ligne c) est l'horloge d'échantillonnage des circuits échantillonneurs-bloqueurs EB2 et EB4. L'échantillonnage est précédé d'une période d'auto-zéro (référencée AZ) dont la durée permet de respecter le temps d'établissement (référence EST) du circuit DACC qui reçoit une nouvelle conversion sur le front descendant de l'horloge HE. Une donnée n ne sera valide qu'après le temps d'établissement EST à partir du début de la période d'auto-zéro AZ, cette donnée n sera échantillonnée pendant le temps restant SAT de la période de HE1 ou HE2. Les lignes d, e, f, g représentent respectivement les temps pendant lesquels les données sont échantillonnées par les circuits d'échantillonneurs- bloqueurs EB1, EB2, EB3, EB4. La ligne h de la figure 3 montre un signal d'horloge HL présent à une sortie du circuit CS et permet de visualiser le retard de deux périodes d'échantillonnage pour une lecture sur les fronts de montée de l'horloge HL.

Un dispositif de comparaison de signaux coopère avec la ligne à retard ADN. Ce dispositif est composé des 3 circuits comparateurs C1, C2, C3, et sert à délivrer un signal logique dépendant de la comparaison des signaux analogiques d'entrée. Le signal logique à la sortie du comparateur C1 à entrées non inverseuses est représentatif du signe de la somme des signaux à la sortie des échantillonneurs-bloqueurs EB1 et EB4. Pour cela les signaux de sortie des échantillonneurs-bloqueurs EB1 et EB4 sont présentés aux entrées non inverseuses du comparateur C1. Le signal logique à la sortie du comparateur C2 est représentatif du signe de la différence des signaux à la sortie des échantillonneurs-bloqueurs EB1 et EB4. Pour cela le signal de sortie de l'échantillonneur bloqueur EB1 est présenté à l'entrée non inverseuse du comparateur C2 alors que le signal de sortie de l'échantillonneur-bloqueur EB4 est présenté à l'entrée inverseuse du comparateur C2. Le signal logique à la sortie du comparateur C3 est représentatif du signe de la différence entre le signal de sortie de l'échantillonneur-bloqueur EB1 et la tension de référence VREF. Pour cela le signal de sortie de l'échantillonneur-bloqueur EB1 est présenté à l'entrée non inverseuse du comparateur C3 et le signal VREF est appliqué à l'entrée inverseuse du comparateur C3. Les sorties des comparateurs C1, C2, C3 peuvent présenter, par convention, la valeur "0" (VSS) pour un signe négatif.

Les sorties des comparateurs C1, C2, C3 sont reliées aux entrées d'un registre LAT chargé de mémoriser sur un front montant de l'horloge HL (émise par le circuit CS) les valeurs logiques des sorties desdits comparateurs C1, C2, C3. En effet, dans un but de simplification de la réalisation du circuit analogique BBAC, le circuit BBAC comprend, pour permettre l'échantillonnage, même pour un faible recouvrement, d'une donnée n à un circuit déterminé et de ladite donnée retardée (n-2) de deux périodes d'échantillonnage, une ligne à retard analogique constituée simplement de quatre circuits échantillonneurs-bloqueurs associée à un registre de type latch. Grâce à une telle association, il n'est plus nécessaire d'utiliser cinq échantillonneurs-bloqueurs indispensables à l'obtention d'un échantillonnage de deux données ayant un retard de deux périodes d'échantillonnage l'une par rapport à l'autre, et comme il est plus aisé de réaliser de manière intégrée un registre de type latch plutôt qu'un cinquième échantillonneur-bloqueur, la mise en oeuvre du circuit BBAC s'en trouve simplifiée. Ainsi en se référant aux lignes d, g et h de la figure 3 il apparaît que, même pour un faible recouvrement, le registre LAT mémorise sur le front de montée n de l'horloge HL :

* n + (n-2) à la sortie du comparateur C1
* n - (n-2) à la sortie du comparateur C2
* n - VREF à la sortie du comparateur C3

Les sorties du registre LAT sont connectées aux sorties du circuit BBAC. La sortie représentative de l'état de comparateur C1 est connectée à la borne SS relative au signe de la somme des signaux de sortie des échantillonneurs-bloqueurs EB1 et EB4. La sortie représentative de l'état du comparateur C2 est connectée à la borne SD relative au signe de la différence des signaux de sortie des échantillonneurs-bloqueurs EB1 et EB4. La sortie représentative de l'état du comparateur C3 est connectée à la borne SI relative au signe du signal de sortie de l'échantillonneur-bloqueur EB1 par rapport à la tension VREF (sachant que la tension VREF = (VDD-VSS)/2). Afin de permettre l'exécution de tests internes au modem, trois interrupteurs sont insérés entre les trois sorties du registre LAT et les trois bornes de sortie SS, SD, SI. Les trois interrupteurs sont commandés par la broche logique BAE et autorisent la connexion des sorties SS, SD et SI soit comme on vient de le voir aux trois sorties du registre LAT, soit à la tension VSS ("0") pour les sorties SS et SD et à la tension VDD ("1") pour la sortie SI. Les trois sorties SS, SD, SI sont transmises (3 fils) vers l'organe de calcul de l'annuleur d'écho EC du circuit PLC.

Dans le circuit BBAC, la fonction d'égalisation automatique est assurée par le circuit d'égalisation automatique EGA. Le circuit EGA est conçu pour compenser les distorsions d'amplitude que subit le signal reçu. La ligne peut être assimilée à un filtre passe-bas qui atténue fortement les composantes de fréquences élevées par rapport aux composantes de fréquences basses contenues dans le signal transmis. Le circuit d'égalisation doit en fait être un dispositif dont les caractéristiques sont asservies en fonction du niveau de signal reçu qui varie relativement à la longueur de la ligne. Les composantes atténuées doivent être amplifiées de telle sorte que le signal émis soit restitué. Pour cela le circuit d'égalisation automatique est constitué d'un amplificateur à gain élevé suivi d'un filtre égaliseur passe-bande à capacités commutées pour s'adapter automatiquement à la fréquence des données sans ajustement des pentes, la fréquence de coupure variant automatiquement, le filtre passe-bande étant composé de filtres passe-haut et passe-bas de même type élaborés autour d'amplificateurs opérationnels conçus pour écrêter les signaux de manière symétrique par rapport à une tension prédéterminée lors d'un fonctionnement en régime non linéaire.

Ainsi lorsque la ligne est longue, le signal reçu est faible. Le circuit d'égalisation se comporte alors linéairement et corrige l'atténuation sélective due à la ligne. La pente des filtres passe-haut correspond à une correction d'une ligne de caractéristiques moyennes et de longueur maximale. Les filtres passe-bas coupent les fréquences élevées (supérieures à la fréquence bit). Lorsque la ligne est courte, le signal reçu a un niveau élevé. Il est alors amplifié par l'amplificateur à gain élevé puis par les filtres passe-haut. Il atteint ainsi rapidement la valeur d'écrêtage. La fonction de transfert du filtre égaliseur évolue et la fréquence de coupure du filtre passe-haut est modifiée. Pour un gain élevé (supérieur ou égal à 4) de l'amplificateur précédant le filtre égaliseur, la variation de la fonction de transfert due à l'écrêtage plus ou moins fort du signal suit fidèlement la caractéristique de la ligne. Il est à noter que plus la ligne est courte, et donc moins elle atténue, plus le signal reçu est fort et ainsi corrélativement moins la fonction de transfert du filtre égaliseur corrige le signal. Il est important que l'écrêtage reste symétrique, par rapport à une tension qui ici est la tension de référence VREF = - (VDD-VSS)/2, sur toute la traversée du filtre.

La réalisation de tels filtres imposent certaines contraintes en ce qui concerne le choix des amplificateurs opérationnels (tension d'alimentation dissymétrique lorsqu'ils écrêtent de façon dissymétrique, produit gain-bande élevé, tension maximum d'entrée supérieure ou égale à la tension maximum de sortie). De tels amplificateurs opérationnels sont par exemple du type TLC071 de chez Texas Instruments.

Le problème de réalisation d'un circuit égaliseur performant et sans réglage est de la sorte avantageusement résolu.

A l'entrée du circuit d'égalisation automatique EGA est ainsi appliqué le signal de sortie de l'échantillonneur-bloqueur EB1 pour y être également échantillonné. Cependant le signal de sortie d'un échantillonneur-bloqueur est affecté dans sa forme (bruits dus à la commutation) ce qui a pour effet de dégrader le rapport signal à bruit et en outre dans le cas présent il a été imposé une période d'auto-zéro aux échantillonneurs-bloqueurs pour respecter le temps d'établissement du circuit DACC, période pendant laquelle il faut éviter d'échantillonner si l'on ne veut pas altérer le contenu des données. C'est pour cela que selon un mode de réalisation préféré du circuit selon l'invention un filtre préégaliseur est associé à l'amplificateur de gain élevé à l'entrée du circuit d'égalisation automatique EGA pour prééchantillonner les données et filtrer les bruits dus à la commutation améliorant ainsi le rapport signal à bruit, le filtre

préégaliseur étant de plus échantillonné à une fréquence multiple de celle utilisée pour les autres fonctions du circuit pour restituer fidèlement le contenu des données. Le signal issu de l'échantillonneur-bloqueur EB1 est donc prééchantillonné dans le filtre préégaliseur PREG et le signal à égaliser est préfiltré. Le filtre préégaliseur PREG est un filtre passe-bas d'ordre 1 (Référence 1) qui utilise une fréquence d'échantillonnage de 12Fo, ce qui permet de ne pas prélever la partie d'auto-zéro de l'échantillonneur-bloqueur. La fréquence de coupure à -3dB fc est commutable en fonction d'une consigne extérieure appliquée sur la borne CP :

pour CP = "0" (VSS) alors fc = 0,22 Fo.
pour CP = "1" (VDD) alors fc = 0,4 Fo.

Ce filtre associé à l'amplificateur de gain élevé présente d'autre part trois accès d'entrée. L'entrée Ea qui reçoit le signal de sortie de l'échantillonneur-bloqueur EB1 et qui est affecté d'un gain égal à 4. L'entrée Eb connectée à l'interrupteur analogique B3.4, elle reçoit ainsi le signal VREF lorsque le modem fonctionne normalement en émission-réception et le signal présent sur la borne EA lorsqu'un test est exécuté dans le modem, cette borne Eb est affectée d'un gain égal à 1/4. L'entrée E3, enfin est l'entrée connectée à la sortie de l'égaliseur EGA pour la compensation de la tension de décalage présente à la sortie de l'égaliseur, un gain égal à 2 est affecté à cette entrée.

Le signal de sortie du filtre prééqaliseur PREG associé à l'amplificateur à gain élevé est alors appliqué à l'entrée d'un filtre égaliseur EG passe-bande à capacités commutées. Le signal est écrêté automatiquement et symétriquement par rapport à la tension VREF et son amplitude est limitée par exemple à 4/5 de VDD et à 1/5 de VDD. Le filtre EG est constitué de quatre filtres distincts d'ordre 2 (Référence 1), un filtre passe-haut suivi d'un filtre passe-bas lui-même suivi d'un filtre passe-haut enfin suivi d'un filtre passe-bas, les deux filtres passe-haut étant identiques et les deux filtres passe-bas étant également identiques. Enfin tous ces filtres sont échantillonnés à la fréquence 48 fo.

La sortie du filtre EG est elle-même filtrée par un circuit intégrateur RCE de constante de temps peu différente de 1/4Fo, puis appliquée à la borne non inverseuse d'un comparateur C4 dont la borne inverseuse est mise au potentiel VREF. Le rôle du comparateur C4 est de convertir le signal de sortie de l'égaliseur EGA du code biphase en un code binaire. Le signal de sortie du comparateur C4 est transmis vers la borne DCR via un interrupteur logique IE4 commandé par le signal BAE, la borne DCR présente ainsi soit une tension VDD lorsque le modem effectue un test interne soit le signal de sortie du comparateur C4 lorsque le modem fonctionne normalement en émission-réception. La borne DCR est reliée au circuit PLC où le signal est d'une part traité par un circuit débrouilleur DSC qui présente à sa sortie le signal des données reçues RD à transmettre sur le fil 104 (Standard RS 232/V24) et d'autre part exploité pour récupérer l'horloge au moyen d'un circuit de synchronisation BS qui présente alors à sa sortie l'horloge réception RCL transmise sur le fil 115 (Standard RS 232/V24).

Pour fournir un point d'observation entre la sortie du filtre EG et le comparateur C4 il a été disposé un amplificateur AO monté en suiveur et donc de gain 1. La sortie de l'amplificateur est reliée à la borne OE qui représente ainsi la recopie du signal analogique issu du circuit d'égalisation EGA.

En outre, les amplificateurs opérationnels utilisés dans le circuit d'égalisation EGA peuvent présenter une tension de décalage en sortie qui multipliée par le gain, perturbe sensiblement la symétrie du signal écrêté. Il convient dans ce cas de compenser cette tension de décalage. Lors d'une transmission en bande de base il est possible de brouiller les données émises avant de les coder, c'est le rôle du brouilleur SCR présent dans le circuit logique PLC. En sortie du brouilleur SCR existe donc un message numérique pseudo-aléatoire composé d'un nombre égal de zéros ("0") et de uns ("1"), lorsque ce message est considéré sur une période suffisamment longue. La valeur moyenne du signal relatif au message de données codées en biphase est dans ce cas nulle. Lorsque ce signal est reçu et égalisé, sa valeur moyenne doit rester nulle. Lorsque ce n'est plus le cas, cela signifie qu'une tension de décalage est venue se superposer au signal. Il faut alors corriger cette tension de décalage afin de retrouver la propriété de moyenne nulle du signal reçu. C'est pourquoi selon une caractéristique du circuit selon l'invention celui-ci est en outre pourvu de deux broches de connexion reliées l'une à l'entrée l'autre à la sortie du circuit d'égalisation automatique pour y connecter une cellule intégratrice en formant ainsi une boucle d'annulation de tension de décalage imposant au signal de sortie du circuit d'égalisation une valeur moyenne nulle. C'est le rôle de la cellule intégratrice RC (voir figure 1) qui est connectée entre la sortie SEG du circuit EGA et son entrée E3. De cette façon lorsque le signal à l'entrée du comparateur C4 n'est affecté par aucune tension de décalage parasite, le nombre de "0" et de "1" en sortie du comparateur est identique et la tension de correction de tension de décalage en sortie de la cellule intégratrice RC et donc à l'entrée E3 est VREF = (VDD-VSS)/2. Si par contre, le circuit d'égalisation génère une tension de décalage à l'entrée du comparateur, un déséquilibre entre le nombre de "0" et de "1" est observé à sa sortie. La tension de correction de tension de décalage varie alors dans le sens inverse autour de la position (VDD-VSS)/2 et impose au système de modifier la tension de décalage à l'entrée du comparateur. Lorsque l'équilibre est atteint pour une tension de correction donnée celle-ci subsiste tant qu'il y a coïncidence entre le nombre de "0" et de "1". En pratique un simple circuit résistance-condensateur suffit à intégrer le signal en sortie du comparateur. Lors d'expériences les résultats obtenus avec des filtres à capacités commutées fortement générateurs de tension de décalage ont montré le bien fondé de cette réalisation.

Le modem ainsi obtenu en associant le circuit intégré analogique BBAC au circuit logique précaractérisé PLC peut, comme cela a été vu précédemment, fonctionner soit en mode émission-réception, soit en mode de tests, le mode de fonctionnement étant sélectionné au moyen des signaux de commande BCL et BAE.

Les interrupteurs logiques IE1, IE2, IE3, IE4 sont commandés par le signal appliqué à la broche BAE.

Si BAE = "0" (VSS), les signaux d'erreurs SS, SD, SI sont transmis vers l'annuleur d'écho EC et le signal de données DCR est émis vers le circuit débrouilleur DSC, le fonctionnement est alors nominal (émission-réception), SS étant le signal de sortie du comparateur C1, SD le signal de sortie du comparateur C2, SI le signal de sortie du comparateur C3 et DCR le signal de sortie du comparateur C4.

Si BAE = "1" (VDD), l'annuleur d'écho est alors bloqué, les broches SS et SD étant portées au potentiel VSS alors que les broches SI et DCR sont portées au potentiel VDD.

La commande BCL agit sur les interrupteurs analogiques B3.1, B3.2, B3.3, B3.4 et permet de sélectionner le test de bouclage 3, qui dans un équipement de transmission consiste à reboucler une fraction du signal émis sur la réception, alors qu'aucun signal ne doit être transmis ou reçu de la ligne ou de la jonction.

Si BCL = "1" (VDD), le modem fonctionne en émission-réception, l'interrupteur B3.1 connecte l'entrée SR à l'entrée de l'amplificateur AEM, l'interrupteur B3.2 déconnecte l'entrée de AEM de sa sortie, l'interrupteur B3.3 connecte l'entrée du filtre de réception PBRE à la broche E1 et l'interrupteur B3.4 connecte l'entrée Eb du circuit égaliseur à la tension VREF.

Si BCL = "0" (VSS), le modem est placé en test de bouclage 3. L'interrupteur B3.1 déconnecte l'entrée SR de l'entrée de l'amplificateur AEM, l'interrupteur B3.2 connecte l'entrée de AEM à sa sortie (AEM court-circuité), l'interrupteur B3.3 connecte l'entrée du filtre PBRE à la broche d'entrée EA (fraction du signal d'émission réinjectée à l'entrée de PBRE) et l'interrupteur B3.4 connecte l'entrée Eb de l'égaliseur à la broche d'entrée EA.

Un tel circuit associé au circuit logique précaractérisé est d'un grand intérêt quant à son utilisation dans un modem en bande de base. Outre ses performances constatées lors d'expériences et sa complète automatisation, il est remarquable relativement à sa très haute intégration.

**Revendications**

1. Circuit analogique (BBAC) associé à un circuit logique précaractérisé (PLC) pour constituer un modem adapté à transmettre des données à une certaine cadence sur un canal de transmission, circuit analogique comportant :
   - un accès d'horloge (HE) pour recevoir un signal d'horloge représentatif de ladite cadence,
   - une partie émission formée:
     - d'un accès (DEC) pour recevoir des données à transmettre émanant du circuit logique précaractérisé,
     - d'au moins un organe de filtrage d'émission pour filtrer les données à transmettre,
     - d'un accès (SEM) pour émettre, sur le canal de transmission, les données à transmettre filtrées,
   - une partie réception formée :
     - d'un accès (E1) de réception pour recevoir des données transmises émanant du canal de transmission,
     - d'un organe de traitement impliquant au moins des organes de filtrage (PBRE, PREG,EG,...) de réception pour traiter les données transmises,
     - d'un accès pour fournir au circuit logique précaractérisé des données transmises traitées,
   caractérisé en ce que :
     - il est monolithiquement intégré selon la technologie CMOS,
     - les organes de filtrages sont constitués par des filtres à capacités commutées munis d'une commande de commutation de la gamme de cadence et sont pilotés par un signal d'horloge de fréquence multiple de celui appliqué audit accès d'horloge.

2. Circuit analogique selon la revendication 1 pour lequel le modem est pourvu d'un annuleur d'écho (EC) opérant sur la base d'un algorithme dit du signe différentiel nécessitant des moyens de retard pour obtenir des données d'erreur retardées, caractérisé en ce qu'il comporte ces moyens de retard constitués par des circuits échantillonneurs-bloqueurs (EB1, EB2, EB3, EB4) montés en cascade et commandés par des signaux déphasés (HE1, HE2) dérivés du signal d'horloge et par un registre (LAT) de type latch pour recevoir les signaux de sorties de circuits comparateurs branchés en différents points de ladite cascade.

3. Circuit analogique selon la revendication 1 ou 2, pour lequel le modem est pourvu de moyens d'égalisation (EG) munis d'une fonction d'écrêtage, caractérisé en ce que l'organe de traitement comporte ces moyens d'égalisation constitués par un amplificateur à gain élevé suivi par un premier organe de filtrage de réception de type passe-bande composé d'au moins une partie de filtrage de type passe-haut et d'au moins une partie de filtrage de type passe-bas, lesdites parties étant élaborées autour d'au moins un amplificateur opérationnel conçu pour écrêter les signaux présents audit accès de réception de manière symétrique par rapport à une tension prédéterminée lors d'un fonctionnement en régime non linéaire.

4. Circuit analogique selon la revendication 3, caractérisé en ce qu'un deuxième organe de filtrage de réception (PREC) est utilisé comme filtre préégaliseur associé à l'amplificateur de gain élevé pour préfiltrer les signaux présents à l'accès de réception.

5. Circuit analogique selon la revendication 3 ou 4, caractérisé en ce qu'il est prévu une boucle d'annulation de décalage constituée par une cellule intégratrice (RC) connectée entre l'entrée (E3) et la sortie des moyens d'égalisation (SEG) pour imposer une valeur moyenne nulle à son signal de sortie.

**Claims**

1. Analog circuit (BBAC) associated with a predefined logic circuit (PLC) for forming a modem adapted to transmit data at a certain rate over a transmission channel, the analog circuit comprising:
   - a clock input port (HE) for receiving a clock signal which represents said rate,
   - a transmission section comprised of:
     - an input port (DEC) for receiving data to be transmitted coming from the predefined logic circuit,
     - at least a transmit filter unit for filtering the data to be transmitted,
     - an output port (SEM) for transmitting over the transmission channel the filtered data to be transmitted,

- a receiving part comprised of:
    - a input port (E1) for receiving transmitted data coming from the transmission channel,
    - a processing unit comprising at least receiving filter units (PBRE, PREG, EG, ...) for processing the transmitted data,
    - a output port for supplying to the predefined logic circuit processed transmitted data,

characterized, in that:
    - it is monolithically integrated in accordance with CMOS technology,
    - the filter units are comprised of switched capacitor filters which include a switch control of the timing range and are controlled by a clock signal having a frequency that is a multiple of that applied to said clock input port.

2. Analog circuit as claimed in Claim 1, for which the modem comprises a echo canceller (EC) operating on the basis of a algorithm called differential sign algorithm which needs delay means for obtaining delayed error data, characterized in that it comprises these delay means comprised of sample-and-hold circuits (EB1, EB2, EB3, EB4) in a cascade arrangement and controlled by phase-shifted signals (HE1, HE2) derived from the clock signal, and of a latch-type register (LAT) for receiving the output signals of the comparing circuits branched at various points of said cascade arrangement.

3. Analog circuit as claimed in one of the Claims 1 or 2 for which the modem comprises equalizing means (EG) with a clipping function, characterized in that the processing unit comprises this equalizing means which is comprised of a high-gain amplifier followed by a first bandpass-type receiving filter unit which has at least a high-pass filter type part and at least a low-pass filter type part, said parts being arranged around at least an operational amplifier designed for clipping the signals present at said input port in a symmetrical manner relative to a predetermined voltage during operation in a non-linear mode.

4. Analog circuit as claimed in Claim 3, characterized in that a second receiving filter unit (PREG) is used as a pre-equalizing filter connected to the high-gain amplifier for prefiltering the signals present at the input port.

5. Analog circuit as claimed in Claim 3 or 4, characterized in that it comprises an offset cancelling loop formed by a integrating cell (RC) arranged between the input (E3) and the output (SEG) of the equalizing means to impose on the output signal of the equalizing means a zero mean value.

**Patentansprüche**

1. Analoge Schaltung (BBAC), die einer vordefinierten digitalen Schaltung (PLC) zugeordnet ist zum Bilden eines Modems zum Übertragen von Daten mit einer bestimmten Übertragungsrate über einen Übertragungskanal, wobei diese analoge Schaltung die nachfolgenden Elemente aufweist:
    - einen Takteingang (HE) zum Empfangen eines die genannte Übertragungsrate darstellenden Taktsignals,
    - einen Sendeteil, der die nachfolgenden Elemente umfaßt:
        - einen Eingag (DEC) zum Empfangen von der vorbestimmten logischen Schaltung herrührender zu übertragender Daten,
        - mindestens eine Übertragungsfiltereinheit zur Filterung der zu übertragenden Daten,
        - einen Ansgag (SEM) zum Übertragen der gefilterten, zu übertragenden Daten über den Übertragungskanal,
    - einen Empfangsteil, der die nachfolgenden Elemente umfaßt:
        - einen Eingag (E1) zum Empfangen von dem Übertragungskaal herrührender, übertragener Daten,
        - eine Verarbeitungseinheit mit mindestens Empfangsfiltereinheiten (PBRE, PREG, EG, ...) zum Verarbeiten der übertragenen Daten,
        - einen Ausgang zum Liefern der verarbeiteten, übertragenen Daten zu der vordefinierten logischen Schaltung,

dadurch gekennzeichnet, daß
    - sie entsprechend der CMOS-Technologie monolithisch integriert ist,
    - die Filtereinheiten aus geschalteten Kondensatorfiltern mit einem Schaltregler vom Taktbereich bestehen und durch ein Taktsignal gesteuert werden, wobei die Frequenz dieses Taktsignals ein Vielfaches der dem genannten Taktsignaleingang zugeführten Frequenz ist.

2. Analoge Schaltung nach Anspruch 1 für die der Modem mit einem Echokompensator (EC) versehen ist, der auf Basis eines als differen-

tielles Vorzeichen bezeichneten Algorithmus arbeitet, der Verzögerungsmittel braucht zum Erhalten verzögerter Fehlerdaten, dadurch gekennzeichnet, daß sie diese Verzögerungsmittel enthält, die aufgebaut sind aus kaskadengeschalteten Abtast-und-Halteschaltungen (EB1, EB2, EB3, EB4) und die durch phasenverschobene Signale (HE1, HE2) gesteuert werden, die von dem Taktsignal abgeleitet werden, sowie aus einem Latch-Register (LAT) zum Empfangender der Ausgangssignale der an mehreren Stellen der genannten Kaskadenschaltung abgezweigten Vergleichsschaltungen.

3.  Analoge Schaltung nach einem der Ansprüche 1 oder 2, für die der Modem Entzerrungsmittel (EG) mit einer Begrenzungstunktion aufweist, dadurch gekennzeichnet, daß die Verarbeitungsanordnung dieses Entzerrungsmittel aufweist, das aus einem Hochleistungsverstärker mit einer nachfolgenden ersten Bandpaß-Empfangsfiltereinheit besteht, die mindestens einen Hochpaßfilterteil und mindestens einen Tiefpaßfilterteil aufweist, wobei diese Teile um mindestens einen Operationsverstärker zum Begrenzen der an dem genannten Eingag vorhandenen Signale vorgesehen sind, wobei die Begrenzung gegenüber einer vorbestimmten Spannung im Betrieb in einer nicht-liniearen Betriebsart auf symmetrische Weise erfolgt.

4.  Analoge Schaltung nach Anspruch 3, dadurch gekennzeichnet, daß eine zweite Empfangsfiltereinheit (PREG) als Vorentzerrungsfilter verwendet wird, das zur Vorfilterung der Signale am Eingang mit dem Hochleistungsverstärker verbunden ist.

5.  Analoge Schaltung nach Anspruch 3 oder 4, dadurch gekennzeichnet, daß sie eine durch eine integrierende Zelle (RC) gebildete, zwischen dem Eingang (E3) und dem Ausgang (SEG) des Entzerrungsmittels vorgesehene Offset-Austastschleife aufweist zum Überlagern eines Null-Mittelwertes auf dem Ausgangssignal des Entzerrungsmittels.

FIG. 1

FIG. 2

EP 0 318 105 B1

FIG. 3

15